# EUROPÄISCHE PATENTSCHRIFT

(11) **EP 1 369 603 B1**
(45) Veröffentlichungstag und Bekanntmachung des Hinweises auf die Patenterteilung: **03.10.2007**
(21) Anmeldenummer: 03008386.9
(22) Anmeldetag: 11.04.2003
(51) Int. Cl.: F16B 23/00, F16B 35/04, D21D 5/06

(54) **Schraubelement, sowie Verbindungsstelle zum Drehen des Schraubelements**
Screw element, and place of junction to rotate the screw
Elément de vis, et endroit de contact permettant de tourner la vis

(30) Priorität: 31.05.2002 DE 20208439 U
(43) Veröffentlichungstag der Anmeldung: 10.12.2003
(73) Patentinhaber: Voith Patent GmbH, 89522 Heidenheim (DE)
(72) Erfinder: Brettschneider, Werner, 88214 Ravensburg (DE)

(56) Entgegenhaltungen:
- EP-A- 1 020 536
- DE-A- 2 033 556
- DE-A- 3 925 098
- DE-C- 881 129
- DE-U- 29 718 286
- FR-A- 1 236 819
- US-A- 5 461 944
- US-A- 6 016 727

## Beschreibung

Die Erfindung bezieht sich auf ein Verfahren gemäß dem Oberbegriff des Anspruchs 1.

Bei der Aufbereitung von suspendiertem Faserstoff wird der Papier-Rohstoff, z.B. Altpapier, mit Wasser vermischt, zerkleinert und von unerwünschten faserfremden Bestandteilen gereinigt. Die dabei verwendeten Apparate sind einem hohen Verschleiß unterworfen. Der Hauptgrund hierfür sind die in der Suspension enthaltenen hohen Schmutzstoffe wie Metallteile, Steine, Sand und Glasscherben. Bestimmte wichtige hochbeanspruchte Bauteile solcher Apparate können durch austauschbare Verschleißteile geschützt werden. Das gilt insbesondere für Siebe in Stofflösern, Sekundärstofflösern und Sortierern, die auf der beanspruchten Seite mit Leisten versehen werden. Dabei ist in der Regel die Seite zu schützen, an der der Siebräumer vorbeibewegt wird. Auch andere als besonders verschleißgefährdet bekannte Teile von Stofflösern, Sekundärstofflösern, Sortierern und Pumpen, wie z.B. deren Rotoren oder in Stoffreinigern (also Hydrozyklonen) können durch austauschbare Verschleißteile geschützt werden.

Zur Herstellung einer lösbaren Verbindung ist die Verwendung von Schraubelementen, wie z.B. Schrauben, Muttern oder Gewindebolzen die am weitesten verbreitete Methode. Solche Schraubelemente haben sich seit langem bewährt und haben durch ständige Weiterentwicklung eine sehr hohe Vielfalt erreicht. Um das Festziehen und das Lösen einer Schraubverbindung durchführen zu können, weist das Schraubelement ein Drehteil auf, z.B. den Schraubenkopf, an dem Drehwerkzeuge, wie z.B. Schraubenschlüssel oder Schraubenzieher, angesetzt werden können. Dabei haben solche Drehteile, z.B. eine sechskantförmige Umfangfläche oder auf der Stirnfläche angebrachte sechskantförmige Vertiefungen, Schlitze o.ä.

In der gattungsbildenden DE 39 25 098-A1 wird gezeigt, dass bei einer beispielsweise in der Aufbereitung von Papierfaserstoff verwendbaren Vorrichtung Siebe eingesetzt werden, bei denen Verschleißleisten durch Schrauben lösbar befestigt sind. Dabei werden die verwendeten Schrauben als Sicherungsschrauben bezeichnet und nicht weiter spezifiziert.

Ein großer Vorteil von Schraubelementen liegt darin, dass sie wegen der Vielzahl ihrer Anwendungsmöglichkeiten in großen Stückzahlen hergestellt werden. Besonders preisgünstig sind Normschrauben, die für die meisten Befestigungsverfahren benutzt werden. Nur in Ausnahmefällen werden zur Herstellung von lösbaren Verbindungen Spezialschrauben eingesetzt. So ist es aus der GB 2 082 709 A bekannt, Schrauben mit flachen scheibenförmigem Schraubenkopf herzustellen, die dazu dienen, in Balken versenkt zu werden. Dadurch sind sie besonders ästhetisch und können nur mit Spezialschlüsseln herausgedreht werden. Spezialschrauben mit Köpfen, die zum Rand hin offene Nuten aufweisen, zeigt das Gebrauchsmuster DE 297 18 286 U1. Diese Schrauben dienen vorzugsweise zum Befestigen von Deckeln eines in den Boden eingelassenen Kabelschachtes und sollen unempfindlich gegen Verschmutzungen sein. Besonders häufig werden nicht genormte Schrauben verwendet, um den Diebstahl der mit ihnen befestigten Teile zu verhindern. Dabei wird davon ausgegangen, dass potentielle Diebe nur über genormte Werkzeuge zum Lösen von Schrauben verfügen. Beispiele hierfür zeigen die DE 881129 C sowie DE 20 33 556 A.

Ein bekanntes Problem ist die allmähliche Veränderung der zu den Schraubelementen gehörenden Drehteile. Eine solche Veränderung tritt während des Betriebes der mit Verschraubungen versehenen Maschinen auf, insbesondere durch Verschleiß und Korrosion. Als Folge davon lässt sich eine Schraubverbindung oft nicht mehr oder nur sehr schwierig lösen. Beispielsweise kommt es oft vor, dass der Schraubenkopf, also der Teil einer Schraube, an dem das Drehwerkzeug angreifen soll, so verschlissen ist, dass das notwendige Drehmoment zum Lösen der Schraubverbindung nicht mehr übertragen werden kann. Beim Abrutschen oder Durchdrehen des Werkzeuges kann es dann zu Verletzungen des Monteurs kommen. Um dennoch die Verbindung lösen zu können, muss die Schraube ausgebohrt oder abgeschliffen werden, was aufwändig ist und zur Beschädigung der Maschinenteile führen kann. Zwar ist es bekannt, dass die an der Stirnfläche eines Schraubenkopfes angebrachte sechskantförmige Vertiefung (Innen-Sechskantschraube) etwas besser gegen Verschleiß geschützt ist als die Außensechskantschrauben, dennoch ist bei vielen Anwendungen das Problem auch dadurch nicht gelöst worden.

In der nicht vorveröffentlichten DE 100 65 930 ist ein typischer Anwendungsfall für die Erfindung beschrieben, bei dem die Befestigungsschrauben von Verschleißteilen besonders verschleißgefährdet sind. Die beschriebenen Anschraubleisten sind in einem Papierstofflöser oder Sekundärstofflöser eingesetzt, der in Folge der darin behandelten stark verschmutzten Altpapiersuspension einem hohen Verschleiß unterworfen ist. Dieser Verschleiß kann einen großen Teil der Norm-Schraubenköpfe abtragen und dann zum Problem beim Lösen und Wiederanziehen der Schraubverbindungen führen.

Es ist daher die Aufgabe der Erfindung, ein Befestigungsverfahren zu schaffen, mit dem auf einfache Weise Vorsorge getroffen ist, dass auch bei fortgeschrittenem Verschleiß der Befestigungsteile das einfache Lösen der Verbindung möglich ist.

Diese Aufgabe wird durch die im Kennzeichen des Anspruchs 1 beschriebenen Merkmale gelöst.

Durch die beschriebenen Maßnahmen ist gewährleistet, dass selbst bei bereits eingetretenem Verschleiß die Möglichkeit besteht, z.B. mit einem einfachen speziellen Verbindungsteil die Verschraubung zu lösen oder anzuziehen. Das geeignete Verbindungsteil ist mit entsprechenden Stiften oder Vorsprüngen versehen, die in die genannten Vertiefungen hineingesteckt werden können. Daher muss das erforderliche Torsionsmoment nicht wie bisher über eine einzige formschlüssige Verbindung erzeugt werden, sondern über mehrere beabstandete Vertiefungen. Das übliche Problem des Abrundens der formschlussbildenden Profile und damit des Durchrutschens oder Abrutschens des Werkzeuges tritt nicht mehr auf. Die Verkürzung der Vertiefungen durch Abtrag eines als Verschleißvorrat anzusehenden Materialüberschusses ist unschädlich. Auch Formveränderungen der Vertiefungen, wie z.B. das Ovalwerden von Kreisbohrungen beeinträchtigen die Funktion nicht. Dennoch ist die Handhabung nach wie vor sehr einfach.

Eventuell können erfindungsgemäße Schraubelemente sehr einfach dadurch hergestellt werden, dass handelsübliche Schrauben oder Muttern (Normteile) entsprechend abgeändert werden. So können z.B. die Schraubenköpfe von Senkschrauben mit Zylinderbohrungen versehen werden. In vielen Fällen sind jedoch Spezialanfertigungen mit besonderem Verschleißvorrat (Materialüberschuss) zu empfehlen.

Die Erfindung und ihre Vorteile werden weiter beschrieben an Hand von Zeichnungen. Dabei zeigen:
- Fig. 1: ein typisches Beispiel für eine erfindungsgemäß hergestellte Verbindung;
- Fig. 2: ein erfindungsgemäßverwendetes Schraubelement zusammen mit einem geeigneten Verbindungsteil (Seitenansicht);
- Fig. 3: Teile der Fig. 2 in Ansicht von oben;
- Fig. 4: eine Variante am Beispiel einer Senkschraube;
- Fig. 5: eine weitere Variante in Seitenansicht;
- Fig. 6: die in Fig. 5 gezeigte Ausführung in Ansicht von oben.

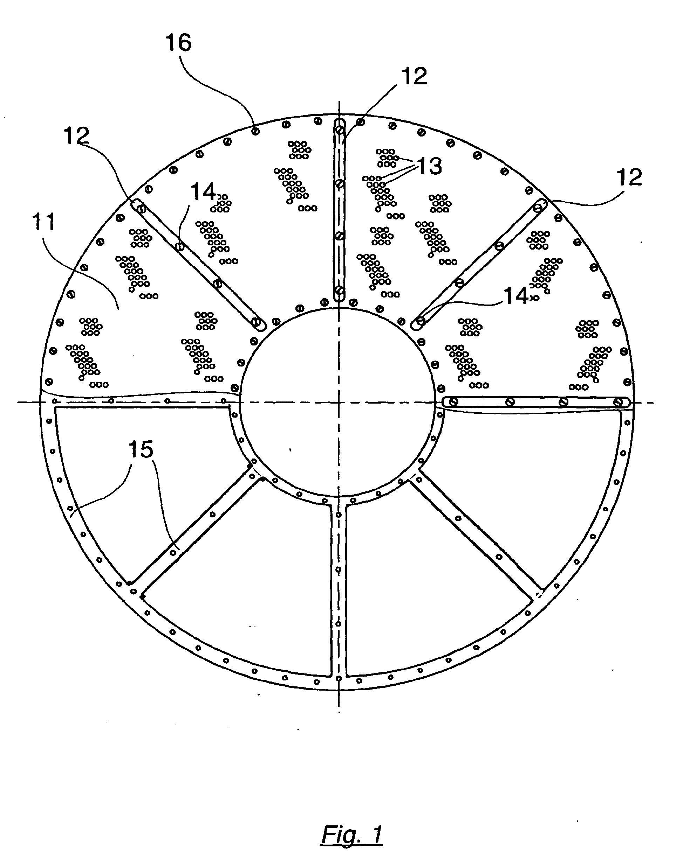

In Fig. 1 ist der Siebbereich eines Sekundärstofflösers für die Altpapieraufbereitung dargestellt, der der Bearbeitung von Altpapiersuspensionen dient und bekanntlich besonders verschleißgefährdet ist. Man erkennt das nur teilweise gezeichnete Sieb 11, welches mit einer Anzahl von Leisten 12 versehen ist. Dabei ist die Darstellung so gewählt, dass die Blickrichtung von der Seite her erfolgt, auf der auch ein - nicht gezeigter - Siebräumer angeordnet ist. Die Sieböffnungen 13 des Siebes 11 sind nur teilweise dargestellt. Üblicherweise dient das Sieb dazu, den bereits aufgelösten bzw. entstippten Anteil des Papierstoffes passieren zu lassen, während noch nicht ausreichend aufgelöste Papierfetzen und größere Verunreinigungen abgewiesen werden. Dabei führen die am Sieb vorbei gleitenden Verunreinigungen, wie etwa Metallteile, Sand, Steine oder Glasscherben, zu einem sehr starken Verschleiß, der sich besonders bei den aufgeschraubten Leisten 12 auswirkt. Selbst wenn diese aus einem verschleißfesten Material hergestellt werden, ist in bestimmtem Abstand deren Austausch zweckmäßig. Die Schrauben 14, die zur lösbaren Befestigung der Leisten 12 dienen, sind mit je einem Drehteil ausgestattet, in das mindestens zwei Vertiefungen eingesenkt sind, was allerdings erst in den nachfolgenden Figuren klarer erkennbar ist. Die Schrauben 14 können entweder in das Sieb 11 eingeschraubt sein oder auch in ein darunter liegendes, zum Auflöseapparate gehörendes Stützgerüst 15. Die Schrauben 16, mit denen das Sieb 11 auf dem Stützgerüst 15 befestigt ist, sind hier als konventionelle Schrauben gezeichnet, sie könnten aber auch gemäß den vorliegenden Patentansprüchen ausgewählt sein, um den Austausch des Siebes 11 zu erleichtern. Das Sieb 11 ist ringförmig oder aus Ringsegmenten zusammengesetzt.

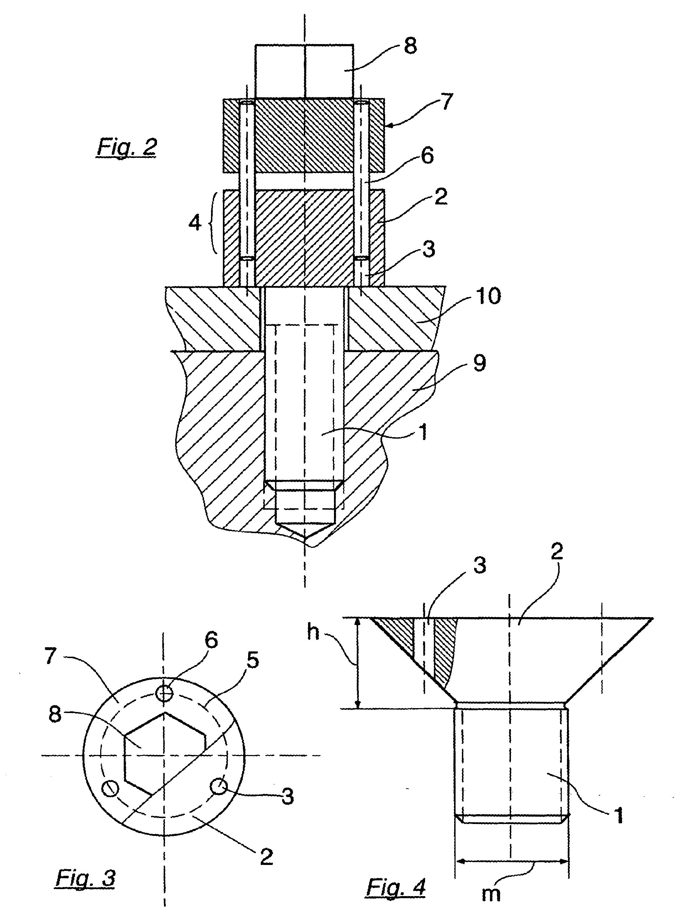

Das Beispiel in Fig. 2 zeigt ein Schraubelement, das als Befestigungsschraube ausgebildet ist. Dabei werden zwei Maschinenteile 9 und 10 lösbar miteinander verschraubt. Diese würden in Fig. 1 den Leisten 12 und dem Sieb 11 entsprechen. Das Schraubelement enthält ein Gewindeteil 1 und ein Drehteil 2, das mit seitlich beabstandeten Vertiefungen 3 versehen ist, hier als parallel angeordnete, durchgehende Bohrungen ausgeführt. Deren Längserstreckung liegt in Richtung des Schraubvorschubes, also bei dieser Zeichnung senkrecht. Auf Grund dieser Lage kann das Torsionsmoment leicht übertragen werden. Zur Betätigung dieses Schraubelementes dient ein entfernbares Verbindungsteil 7 mit vorstehenden Stiften 6, die so angeordnet und dimensioniert sind, dass sie in die Vertiefungen 3 des Drehteils 2 hineinpassen. Das Verbindungsteil trägt außerdem ein Mitnahmeprofil 8, hier ein Außen-Sechskantprofil, welches in der üblichen Weise mit einem Schraubenschlüssel gedreht werden kann. Natürlich kann das Verbindungsteil auch selbst einen Hebel aufweisen, mit dem der Monteur das Torsionsmoment aufbringt. Dann kann ein Mitnahmeprofil entfallen.

Wie bereits ausgeführt wurde, ist das Schraubelement geeignet, auch bei eingetretenem Verschleiß noch gelöst bzw. festgezogen zu werden. Es kann dazu einen Materialüberschuss 4 aufweisen, der als Verschleißreserve anzusehen ist. Das heißt, auch wenn dieser Materialüberschuss abgetragen ist, besteht noch die Möglichkeit, durch Einstecken des Verbindungsteiles 7 die Schraube zu lösen oder festzuziehen. In Fig. 3 ist sowohl das Verbindungsteil 7, als auch das Drehteil 2 zu sehen, da nur ein Teil des Verbindungsteiles gezeichnet ist. Man erkennt hier eine Anordnung der Vertiefungen 3 bzw. Stifte 6 auf einem Kreis 5, der konzentrisch zur Mitte der Schraube ist. Die Vertiefungen sind gleichmäßig, d.h. in gleichen Winkelabständen zueinander angeordnet.

Bei vielen Schraubverbindungen ist es gewünscht, dass die Befestigungsschraube mit einem versenkbaren Kopf versehen ist. Ein solches Beispiel zeigt Fig. 4. Auch dann lässt sich die Erfindung realisieren, indem der Schraubenkopf, also das Drehteil 2, mit einer Anzahl von Vertiefungen 3, insbesondere durchgehenden Zylinderbohrungen versehen wird. Dabei ist die Axialerstreckung des Drehteils 2, also die Kopfhöhe h, bezogen auf den Gewindedurchmesser m mit ca. 0,8 signifikant höher als bei vergleichbaren Normteilen. Senkschrauben mit m = 10 mm haben nach DIN 87 einen entsprechenden Wert von 0,55 und nach DIN 63 einen Wert von 0,34. Auch wenn versenkte Schrauben im eingebauten Zustand nicht vorstehen, sind sie doch einem beträchtlichen Verschleiß unterworfen, der zu Auswaschungen führt, also den Verschleißvorrat einer solchen Schraube abträgt.

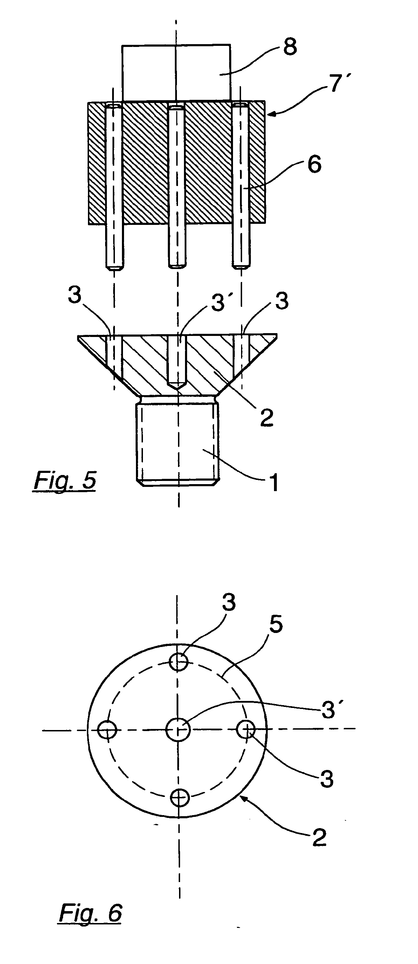

Es ist in vielen Fällen von Vorteil, die Anzahl der Vertiefungen höher als drei zu wählen, um das erforderliche Torsionsmoment auf mehr Stifte verteilen zu können. Im Beispiel gemäß Fig. 5 und 6 wird eine Senkschraube gezeigt, die eine zentrale Vertiefung 3' und vier weitere Vertiefungen 3 außerhalb der Mitte aufweist. Das Verbindungsteil 7' ist entsprechend angepasst.

Bekanntlich gibt es auch Schraubverbindungen, bei denen auf einem feststehenden, also nicht drehbaren Gewindebolzen mindestens eine Mutter aufgeschraubt und festgezogen, bzw. gelöst wird. Es versteht sich, dass auch bei solchen Schraubverbindungen die Erfindung verwendet werden kann, z.B. indem die Mutter an ihrer Stirnseite mit den erwähnten Vertiefungen oder Bohrungen versehen wird.

## Patentansprüche

1. Verfahren zur lösbaren Befestigung von Verschleißteilen in Apparaten zur Behandlung von suspendiertem Faserstoff, insbesondere von Altpapier, unter Verwendung von Schraubelementen mit mindestens einem Gewindeteil (1) und mindestens einem Drehteil (2), wobei das Drehteil (2) dazu dient, die zum Anziehen oder Lösen notwendige Torsionskraft auf das Gewindeteil (1) zu übertragen,
**dadurch gekennzeichnet,**
**dass** ein Drehteil (2) verwendet wird, in das mindestens zwei Vertiefungen (3, 3') eingesenkt sind, deren Längserstreckung im Wesentlichen in derselben Richtung liegt wie der Schraubvorschub des Gewindeteils (1).

2. Verfahren nach Anspruch 1,
**dadurch gekennzeichnet,**
**dass** in das verwendete Drehteil (2) mindestens drei Vertiefungen (3, 3') eingesenkt sind.

3. Verfahren nach Anspruch 1 oder 2,
**dadurch gekennzeichnet,**
**dass** der freie Querschnitt der Vertiefungen (3, 3') auf mindestens 90 % der Längserstreckung der Vertiefungen (3) konstant ist.

4. Verfahren nach Anspruch 3,
**dadurch gekennzeichnet,**
**dass** die Vertiefungen (3) das Drehteil (2) vollständig durchdringen.

5. Verfahren nach Anspruch 1, 2, 3 oder 4,
**dadurch gekennzeichnet,**
**dass** die Vertiefungen (3) parallel angeordnete zylindrische Bohrungen sind.

6. Verfahren nach einem der Ansprüche 1 bis 5,
**dadurch gekennzeichnet,**
**dass** das verwendete Drehteil (2) eine zentrale Vertiefung (3') sowie mindestens eine weitere nicht im Zentrum liegende Vertiefung (3) aufweist.

7. Verfahren nach einem der voranstehenden Ansprüche,
**dadurch gekennzeichnet,**
**dass** zumindest ein Teil der Vertiefungen (3) auf einem konzentrisch mit dem Gewindeteil (1) liegenden Kreis (5) gleichmäßig angeordnet sind.

8. Verfahren nach einem der voranstehenden Ansprüche,
**dadurch gekennzeichnet,**
**dass** das Schraubelement eine Befestigungsschraube mit einem als Drehteil (2) dienenden Schraubenkopf ist.

9. Verfahren nach einem der Ansprüche 1 bis 8,
**dadurch gekennzeichnet,**
**dass** das Schraubelement eine Mutter ist, in deren Stirnseite die Vertiefungen (3) eingesenkt sind.

10. Verfahren nach Anspruch 8 oder 9,
**dadurch gekennzeichnet,**
**dass** das Schraubelement durch Bearbeiten einer handelsüblichen Schraube oder Mutter hergestellt ist.

11. Verfahren nach einem der Ansprüche 1 bis 9,
**dadurch gekennzeichnet,**
**dass** das Drehteil (2) einen als Verschleißvorrat dienenden Materialüberschuss (4) hat, durch den die Vertiefungen (3) geführt sind.

12. Verfahren nach Anspruch 11,
**dadurch gekennzeichnet,**
**dass** der Materialüberschuss (4) **dadurch** erzeugt ist, **dass** die Axialerstreckung des Drehteils (2), bezogen auf den Gewindedurchmesser, signifikant größer ist als bei entsprechenden Normteilen.

13. Verfahren nach Anspruch 12,
**dadurch gekennzeichnet,**
**dass** die Axialerstreckung des Drehteils (2), bezogen auf den Gewindedurchmesser, mindestens 0,6, vorzugsweise mindestens 0,8 beträgt.

14. Verfahren nach einem der voranstehenden Ansprüche,
**dadurch gekennzeichnet,**
**dass** ein Verbindungsteil (7, 7') zum Drehen des Schraubelementes verwendet wird, welches mit mindestens zwei Vorsprüngen oder Stiften (6) versehen ist, die so angeordnet und bemessen sind, **dass** sie in die Vertiefungen (3, 3') des Drehteiles (2) hineinpassen und welches mit einem Mitnahmeprofil (8) zum Ansetzen eines Schraubendrehwerkzeuges versehen ist.

15. Verfahren nach einem der voranstehenden Ansprüche,
**dadurch gekennzeichnet,**
**dass** das Verbindungsteil zum Drehen des Schraubelementes verwendet wird, welches mit mindestens zwei Vorsprüngen oder Stiften (6) versehen ist, die so angeordnet und bemessen sind, **dass** sie in die Vertiefungen (3, 3') des Drehteiles (2) hineinpassen und welches mindestens einen Hebel zur Aufbringung eines Torsionsmomentes aufweist.

16. Verfahren nach einem der voranstehenden Ansprüche,
**dadurch gekennzeichnet,**
**dass** der Apparat zur Behandlung von suspendiertem Faserstoff ein Stofflöser für Altpapier ist.

17. Verfahren nach einem der Ansprüche 1 bis 15,
**dadurch gekennzeichnet,**
**dass** der Apparat zur Behandlung von suspendiertem Faserstoff ein einem Altpapier-Stofflöser nachgeschalteter Sekundärstofflöser ist.

18. Verfahren nach einem der Ansprüche 1 bis 15,
**dadurch gekennzeichnet,**
**dass** der Apparat zur Behandlung von suspendiertem Faserstoff ein Sortierer für verschmutzte Altpapiersuspension ist.

## Claims

1. Method for the detachable fastening of wearing parts in apparatus for treating suspended fibrous material, in particular of waste paper, by using screw elements having at least one threaded part (1) and at least one turning part (2), the turning part (2) being used to transfer the torsional force needed for tightening or loosening to the threaded part (1),
**characterized in that**
use is made of a turning part (2) into which at least two depressions (3, 3') are sunk and whose longitudinal extent lies substantially in the same direction as the screw advance of the threaded part (1).

2. Method according to Claim 1, **characterized in that** at least three depressions (3, 3') are sunk into the turning part (2) used.

3. Method according to Claim 1 or 2, **characterized in that** the free cross section of the depressions (3, 3') is constant over at least 90% of the longitudinal extent of the depressions (3).

4. Method according to Claim 3, **characterized in that** the depressions (3) penetrate the turning part (2) completely.

5. Method, according to Claim 1, 2, 3 or 4, **characterized in that** the depressions (3) are cylindrical holes arranged in parallel.

6. Method according to one of Claims 1 to 5, **characterized in that** the turning part (2) used has a central depression (3') and at least one further depression (3) not located in the centre.

7. Method according to one of the preceding claims, **characterized in that** at least some of the depressions (3) are arranged uniformly on a circle (5) located concentrically with respect to the threaded part (1).

8. Method according to one of the preceding claims, **characterized in that** the screw element is a fastening screw having a screw head used as turning part (2).

9. Method according to one of Claims 1 to 8, **characterized in that** the screw element is a nut, into whose end the depressions (3) are sunk.

10. Method according to Claim 8 or 9, **characterized in that** the screw element is produced by machining a commercially available screw or nut.

11. Method according to one of Claims 1 to 9, **characterized in that** the turning part (2) has a material excess (4) which is used as a wear reserve and through which the depressions (3) are led.

12. Method according to Claim 11, **characterized in that** the material excess (4) is produced by the axial extent of the turning part (2), as based on the thread diameter, being significantly larger than in the case of corresponding standard parts.

13. Method according to Claim 12, **characterized in that** the axial extent of the turning part (2), as based on the thread diameter, is at least 0.6, preferably at least 0.8.

14. Method according to one of the preceding claims, **characterized in that** a connecting part (7, 7') is used to turn the screw element, which connecting part is provided with at least two projections or pins (6) which are arranged and dimensioned in such a way that they fit into the depressions (3, 3') of the turning part (2), and which is provided with a driver profile (8) for the attachment of a screw turning tool.

15. Method according to one of the preceding claims, **characterized in that** a connecting part is used to turn the screw element, which connecting part is provided with at least two projections or pins (6) which are arranged and dimensioned in such a way that they fit into the depressions (3, 3') of the turning part (2), and which has at least one lever for the application of a torsional moment.

16. Method according to one of the preceding claims, **characterized in that** the apparatus for treating suspended fibrous material is a pulper for waste paper.

17. Method according to one of Claims 1 to 15, **characterized in that** the apparatus for treating suspended fibrous material is a secondary pulper connected downstream of a waste paper pulper.

18. Method according to one of Claims 1 to 15, **characterized in that** the apparatus for treating suspended fibrous material is a sorter for contaminated waste paper suspension.

## Revendications

1. Procédé pour la fixation amovible de pièces d'usure dans des appareils pour le traitement de substances fibreuses en suspension, en particulier de vieux papiers, en utilisant des éléments de vis comportant au moins une partie filetée (1) et au moins une partie rotative (2), dans lequel la partie rotative (2) sert à transmettre à la partie filetée (1) la force de torsion nécessaire pour le serrage ou le desserrage, **caractérisé en ce que** l'on utilise une partie rotative (2) dans laquelle sont creusées au moins deux cavités (3, 3'), dont l'extension longitudinale est orientée essentiellement dans la même direction que l'avance de vissage de la partie filetée (1).

2. Procédé selon la revendication 1, **caractérisé en ce qu'**au moins trois cavités (3', 3') sont creusées dans la partie rotative utilisée (2).

3. Procédé selon la revendication 1 ou 2, **caractérisé en ce que** la section transversale libre des cavités (3, 3') est constante sur au moins 90 % de l'extension longitudinale des cavités (3).

4. Procédé selon la revendication 3, **caractérisé en ce que** les cavités (3) traversent entièrement la partie rotative (2).

5. Procédé selon la revendication 1, 2, 3 ou 4, **caractérisé en ce que** les cavités (3) sont des perçages cylindriques parallèles.

6. Procédé selon l'une quelconque des revendications 1 à 5, **caractérisé en ce que** la partie rotative utilisée (2) présente une cavité centrale (3') ainsi qu'au moins une autre cavité (3) non située au centre.

7. Procédé selon l'une quelconque des revendications précédentes, **caractérisé en ce qu'**au moins une partie des cavités (3) sont disposées de manière uniforme sur un cercle (5) concentrique à la partie filetée (1).

8. Procédé selon l'une quelconque des revendications précédentes, **caractérisé en ce que** l'élément de vis est une vis de fixation avec une tête de vis servant de partie rotative (2).

9. Procédé selon l'une quelconque des revendications 1 à 8, **caractérisé en ce que** l'élément de vis est un écrou, dans lequel les cavités (3) sont creusées dans sa face frontale.

10. Procédé selon la revendication 8 ou 9, **caractérisé en ce que** l'élément de vis est fabriqué par usinage d'une vis ou d'un écrou disponible dans le commerce.

11. Procédé selon l'une quelconque des revendications 1 à 9, **caractérisé en ce que** la partie rotative (2) comporte un excédent de matière (4) servant de réserve d'usure, à travers lequel les cavités (3) sont menées.

12. Procédé selon la revendication 11, **caractérisé en ce que** l'excédent de matière (4) est produit en réalisant une extension axiale de la partie rotative (2), rapportée au diamètre du filet, nettement plus grande que dans des pièces normalisées correspondantes.

13. Procédé selon la revendication 12, **caractérisé en ce que** l'extension axiale de la partie rotative (2), rapportée au diamètre de filet, vaut au moins 0,6, de préférence au moins 0,8.

14. Procédé selon l'une quelconque des revendications précédentes, **caractérisé en ce que** l'on utilise pour faire tourner l'élément de vis une pièce de liaison (7, 7'), qui est pourvue d'au moins deux saillies ou tiges (6), qui sont disposées et dimensionnées de telle manière qu'elles s'adaptent dans les cavités (3, 3') de la partie rotative (2), et qui est pourvue d'un profil d'entraînement (8) destiné à appliquer un outil permettant de faire tourner la vis.

15. Procédé selon l'une quelconque des revendications précédentes, **caractérisé en ce que** l'on utilise pour faire tourner l'élément de vis une pièce de liaison, qui est pourvue d'au moins deux saillies ou tiges (6), qui sont disposées et dimensionnées de telle manière qu'elles s'adaptent dans les cavités (3, 3') de la partie rotative (2), et qui comprend au moins un levier destiné à appliquer un couple de torsion.

16. Procédé selon l'une quelconque des revendications précédentes, **caractérisé en ce que** l'appareil pour le traitement d'une substance fibreuse en suspension est une déchiqueteuse pour vieux papiers.

17. Procédé selon l'une quelconque des revendications 1 à 15, **caractérisé en ce que** l'appareil pour le traitement d'une substance fibreuse en suspension est une déchiqueteuse secondaire succédant à une déchiqueteuse pour vieux papiers.

18. Procédé selon l'une quelconque des revendications 1 à 15, **caractérisé en ce que** l'appareil pour le traitement d'une substance fibreuse en suspension est une trieuse pour une suspension de vieux papiers souillés.
